# FASCICULE DE BREVET EUROPEEN

(11) **EP 3 719 283 B1**
(45) Date de publication et mention de la délivrance du brevet: **07.06.2023**
(21) Numéro de dépôt: 20165224.5
(22) Date de dépôt: 24.03.2020
(51) Int. Cl.: F02C 7/32

(54) **PIGNON D'ENTRAINEMENT D'UN SÉPARATEUR AIR/HUILE D'UN BOITIER D'ACCESSOIRES DE TURBOMACHINE**
ANTRIEBSRAD EINES LUFT-ÖL-ABSCHEIDERS EINES ANBAUGERÄTEGEHÄUSES EINES TURBOTRIEBWERKS
PINION FOR DRIVING AN AIR/OIL SEPARATOR OF AN ACCESSORIES UNIT OF A TURBINE ENGINE

(30) Priorité: 04.04.2019 FR 1903620
(43) Date de publication de la demande: 07.10.2020
(73) Titulaire: SAFRAN AIRCRAFT ENGINES, 75015 Paris (FR)
(72) Inventeur: PEREIRA, Alexis, 77550 MOISSY-CRAMAYEL (FR); KOHN, Thierry, 77550 MOISSY-CRAMAYEL (FR)
(74) Mandataire: Argyma

(56) Documents cités:
- WO-A1-2018/172645
- FR-A1- 3 007 463
- US-A- 4 982 705
- US-A1- 2015 007 531

## Description

### DOMAINE TECHNIQUE DE L'INVENTION

La présente invention concerne le domaine des turbomachines et, plus particulièrement, un boîtier d'accessoires pour turbomachine.

De manière classique, une turbomachine pour la propulsion d'un aéronef comprend un boîtier d'accessoires, désigné AGB pour « Accessory GearBox » en langue anglaise. Un tel boîtier comprend une pluralité de roues dentées, désignées pignons, qui sont entraînées en rotation par la turbomachine afin d'alimenter des accessoires, tels que des générateurs électriques, des pompes, un séparateur air/huile, etc.

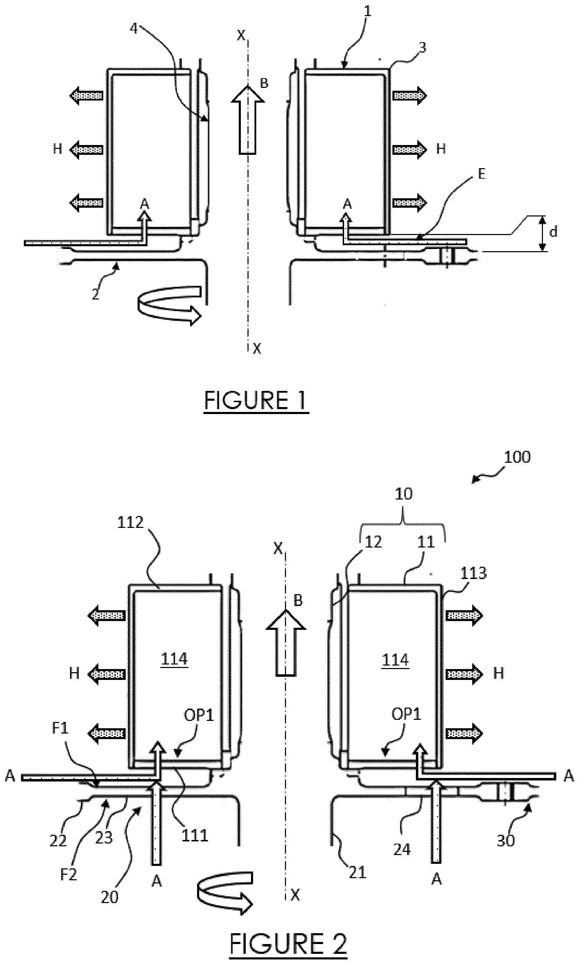

En référence à la figure 1, il est représenté un séparateur air/huile 1 configuré pour recevoir en entrée un flux d'air à déshuiler A et pour fournir en sortie, d'une part, un flux d'huile H et, d'autre part, un flux d'air déshuilé B. En pratique, le séparateur 1 est entraîné en rotation par un pignon 2 du boîtier d'accessoires de manière à permettre une séparation par centrifugation.

De manière connue, le séparateur 1 comprend un corps cylindrique 3 monté sur un arbre creux 4 s'étendant selon un axe X et qui est solidaire du pignon 2. Le corps cylindrique 3 comprend une entrée E du flux d'air à déshuiler A qui est formée entre le corps cylindrique 3 et le pignon 2. Aussi, en fonctionnement, le flux d'air à déshuiler A pénètre radialement par rapport à l'axe X puis parallèlement à l'axe X dans le corps cylindrique 3 où il est séparé en deux flux distincts B, H comme illustré à la figure 1. Le flux d'air déshuilé B est évacué du séparateur 1 par l'arbre creux 4 qui forme ainsi une conduite d'évacuation.

Une telle solution présente des inconvénients. En effet, de nouveaux accessoires étant ajoutés dans le boîtier d'accessoires, l'espace disponible à l'intérieur de ce dernier est réduit. En particulier, la distance axiale d entre le séparateur d'huile 1 et le pignon 2 est réduite pour augmenter la compacité. La section de passage de l'entrée E est alors de plus en plus faible, ce qui limite la circulation du flux d'air à déshuiler A dans le séparateur 1. Le rendement du séparateur 1 est alors réduit, ce qui représente un inconvénient majeur.

Il existe donc un besoin pour une turbomachine ayant un boiter d'accessoires compact pour recevoir un grand nombre d'accessoires tout en permettant une alimentation optimale du séparateur 1 en flux d'air à déshuiler A.

De manière incidente, on connaît par la demande de brevet FR3007463A1 un pignon, solidaire d'un tube central, qui comporte des bras radiaux délimitant entre eux des ouvertures de passage d'un flux d'air qui sont droites, c'est-à-dire, alignées avec l'axe de rotation X. De telles ouverture de passage permettent un gain de masse. Le document US4982705A enseigne un moteur à combustion interne refroidi par air. Le moteur à combustion comprend une poulie à came comprenant une pluralité de pales de ventilateur pour permettre le refroidissement.

### PRESENTATION DE L'INVENTION

Un pignon d'entrainement selon les caractéristiques de la revendication indépendante 1.

L'invention est remarquable en ce que le pignon comprend au moins une ouverture de guidage traversant le voile, ladite au moins une ouverture de guidage définissant au moins une surface de guidage inclinée par rapport à l'axe de rotation X de manière à guider, parallèlement à l'axe, un flux d'air à déshuiler dans le séparateur ou un flux d'air déshuilé hors du séparateur via l'ouverture de guidage du pignon.

Grâce au pignon selon l'invention, le séparateur air/huile permet l'entrée d'un flux d'air à déshuiler ou la sortie d'un flux d'air déshuilé à travers le pignon, ce qui augmente la section de passage par comparaison à l'art antérieur. Ainsi, la distance entre le pignon et le séparateur peut être faible pour augmenter la compacité sans perturber l'entrée ou la sortie d'air du séparateur. En outre, la surface de guidage inclinée permet à l'ouverture de guidage de remplir une fonction de redresseur. La surface de guidage permet d'accélérer la circulation d'un flux d'air entrant ou sortant du séparateur en réalisant un effet de succion. Le débit est avantageusement augmenté, ce qui permet un fonctionnement optimal du séparateur. De manière avantageuse, le pignon 20 remplit ainsi une première fonction d'entraînement du séparateur et une deuxième fonction d'injection/aspiration d'un flux d'air dans/hors du séparateur.

Contrairement à la demande de brevet FR3007463A1 qui enseigne un pignon comportant des bras radiaux délimitant entre eux des ouvertures de passage d'un flux d'air afin de permettre un gain de masse, la présente invention se propose de laisser circuler un flux d'air mais également de le guider. Le débit de circulation est augmenté, ce qui est avantageux.

De manière préférée, au moins une des au moins deux surfaces de guidage est inclinée par rapport à l'axe de rotation d'un angle θ compris entre 5° et 75°, de préférence, entre 20° et 60°, de préférence encore, entre 30° et 50°. Un tel angle permet un redressement optimal du flux d'air entrant ou sortant du séparateur ainsi qu'une augmentation du débit.

De préférence, au moins une des au moins deux surfaces de guidage s'étend radialement à l'axe de rotation X. Ainsi, la surface de guidage permet de redresser le flux d'air lors de la rotation du pignon. On entend qu'au moins une des au moins deux surfaces de guidage s'étend selon sa longueur dans la direction radiale.

Selon l'invention, l'ouverture de guidage définit au moins deux surfaces de guidage opposées l'une à l'autre. Ainsi, l'air est guidé entre les deux surfaces de guidage afin de limiter les perturbations. Le flux d'air est redressé de manière homogène.

De préférence, les deux surfaces de guidage sont radiales. Les deux surfaces de guidage définissent avantageusement un canal qui est incliné par rapport à l'axe de rotation X afin de permettre une accélération par effet de succion.

Selon un aspect préféré, les deux surfaces de guidage possèdent des dimensions identiques.

De préférence, le pignon comprend une pluralité d'ouvertures définissant chacune au moins une surface de guidage afin de guider et d'accélérer une quantité importante d'air dans ou en dehors du séparateur.

De manière préférée, les ouvertures de guidage sont réparties radialement autour de l'axe de rotation X.

L'invention concerne également un boîtier d'accessoires pour turbomachine, ledit boîtier comprenant un séparateur air/huile, configuré pour être alimenté en entrée par un flux d'air à déshuiler et pour fournir en sortie, d'une part, un flux d'air déshuilé et, d'autre part, un flux d'huile par centrifugation, et un pignon tel que présenté précédemment configuré pour entraîner le séparateur en rotation selon un axe de rotation, le pignon étant monté en regard d'une ouverture de passage du séparateur configurée pour permettre le passage d'un flux d'air à déshuiler ou d'un flux d'air déshuilé.

L'invention concerne en outre une turbomachine, notamment pour aéronef, comprenant un boîtier d'accessoires tel que présenté précédemment.

### PRESENTATION DES FIGURES

L'invention sera mieux comprise à la lecture de la description qui va suivre, donnée uniquement à titre d'exemple, et se référant aux dessins annexés sur lesquels :
La figure 1 est une vue schématique en coupe d'un boîtier d'accessoires selon l'art antérieur (décrit précédemment),
La figure 2 est une vue schématique en coupe d'une forme de réalisation d'un boîtier d'accessoires selon l'invention,
La figure 3 est une vue schématique d'un pignon du boîtier de la figure 2,
La figure 4 est une vue schématique de côté du pignon de la figure 3,
La figure 5 est une vue schématique en coupe d'une ouverture de guidage du pignon de la figure 4, et
La figure 6 est une vue schématique en coupe d'une forme de réalisation alternative d'un boîtier d'accessoires selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 2, il est représenté une forme de réalisation d'un boîtier d'accessoires selon l'invention. Un tel boîtier d'accessoires est monté dans une turbomachine, notamment pour un aéronef, et permet d'actionner des accessoires qui participent au fonctionnement de la turbomachine.

Dans cet exemple, le boîtier d'accessoires 100 comprend un carter (non représenté), dans lequel est monté un séparateur air/huile 10 et une pluralité de pignons 20, 30.

Les pignons 20, 30 s'entraînent mutuellement en rotation et sont entraînés en rotation par la turbomachine de manière connue. Chaque pignon 20, 30 permet d'actionner un accessoire en l'entraînant en rotation. Dans l'exemple illustré sur la figure 2, le pignon 20 selon l'invention est relié au séparateur air/huile 10 afin de l'entraîner en rotation.

Le séparateur air/huile 10, également désigné déshuileur, permet de séparer l'huile de l'air afin d'évacuer l'air du boîtier d'accessoires 100. Le séparateur air/huile 10 est configuré pour être alimenté en entrée par un flux d'air à déshuiler A et pour fournir en sortie, d'une part, un flux d'air déshuilé B et, d'autre part, un flux d'huile H par centrifugation. Toujours en référence à la figure 2, le séparateur 10 comprend un corps cylindrique 11 et un arbre 12. Le pignon 20 est relié à l'arbre 12 afin de l'entrainer en rotation autour de l'axe X.

L'arbre 12 s'étend selon un axe X et est monté intérieurement et coaxialement au corps cylindrique 11 et permet de l'entrainer en rotation autour de l'axe X. Le corps cylindrique 11 s'étend axialement selon l'axe X entre une première extrémité 111, dite proximale, orientée vers le pignon 20, et une deuxième extrémité 112, dite distale. Le corps cylindrique 11 comprend une paroi périphérique 113 s'étendant entre la première 111 et la deuxième extrémité 112. Dans cet exemple, la paroi périphérique 113 comprend des moyens de guidage de l'huile H et un orifice d'évacuation de l'huile H hors du corps cylindrique 11. Le corps cylindrique 11 comprend en outre une cavité 114, définie intérieurement à la paroi périphérique 113, dans laquelle entre l'air à déshuiler A. L'air à déshuiler A se présente sous la forme d'air chargé en huile H, autrement dit sous la forme d'un brouillard d'huile.

Dans l'exemple illustré sur la figure 2, le corps cylindrique 11 comprend au niveau de la première extrémité 111 une ouverture de passage OP1 afin de permettre à l'air à déshuiler A de rentrer dans la cavité 114. Comme présenté précédemment, un flux d'air à déshuiler A peut circuler radialement entre le pignon 20 et le séparateur air/huile 10 pour pénétrer dans l'ouverture de passage OP1 située en regard du pignon 20. Lors de la rotation du séparateur 10, l'huile H de la cavité 114 est projetée radialement vers l'extérieur contre la paroi périphérique 113 où elle est guidée par les moyens de guidage jusqu'à l'orifice d'évacuation.

L'arbre 12 est creux afin de former une conduite permettant de guider le flux d'air déshuilé B hors du séparateur 10. L'arbre 12 comprend une ou plusieurs ouvertures permettant de mettre en communication la cavité intérieure de l'arbre 12 avec le volume du corps cylindrique 11 dans lequel circule l'air à déshuiler A. Ainsi, le flux d'air déshuilé B peut circuler du corps cylindrique 11 à la cavité intérieure de l'arbre 12 via les ouvertures. Le flux d'air déshuilé B, séparé du flux d'huile H, est ainsi évacué hors de la cavité 114 du corps cylindrique 11 par l'arbre 12. En particulier, le flux d'air déshuilé B est évacué vers la deuxième extrémité 112 du corps cylindrique 11 comme illustré à la figure 2. Ainsi, le flux d'air à déshuiler A entre dans le corps cylindrique 11 au niveau de sa première extrémité 111 et le flux d'air déshuilé B est évacué hors du corps cylindrique 11 au niveau de sa deuxième extrémité 112, le flux d'huile H étant évacué radialement.

Comme illustré sur les figures 2 à 5, le pignon 20 selon l'invention est monté sur le séparateur air/huile 10 afin de l'entraîner en rotation.

De manière connue, le pignon 20 comprend un axe central 21, une partie périphérique 22 dentée et un voile 23 s'étendant entre l'axe central 21 et la partie périphérique 22. Un tel pignon 20 présente ainsi une forme de roue dentée afin d'être entraîné en rotation par un pignon 30 adjacent. La partie périphérique 22 comprend une pluralité de dents qui sont configurées pour coopérer avec les dents du pignon 30 adjacent afin que les pignons 20, 30 s'entraînent mutuellement en rotation de manière classique.

L'axe central 21 s'étend selon l'axe de rotation X et est configuré pour être monté sur le séparateur air/huile 10, notamment, dans le prolongement de l'arbre 12 du séparateur air/huile 10. Le voile 23 se présente sous la forme d'une paroi définissant une première face F1 et une deuxième face F2 opposée à la première face F1. Lorsque le pignon 20 est monté sur le séparateur 10, la première face F1 est orientée vers le corps cylindrique 11.

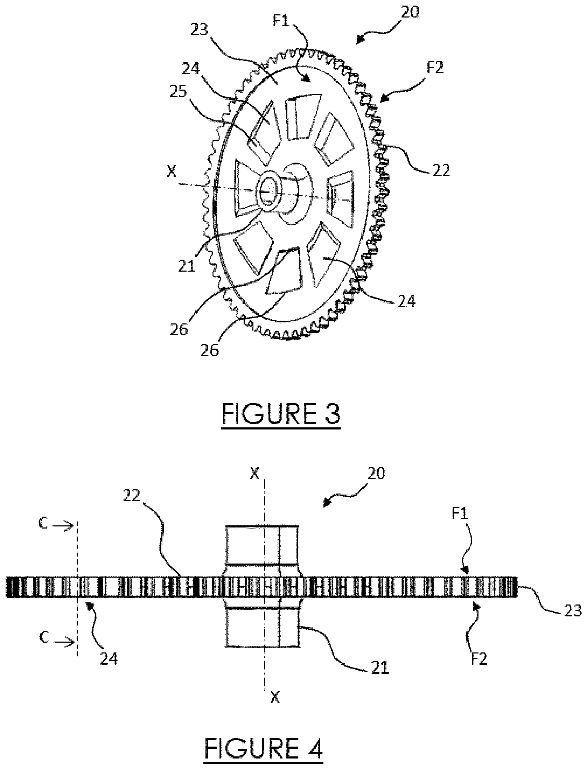

Selon l'invention, en référence à la figure 3, le pignon 20 comprend des ouvertures de guidage 24 traversant le voile 23 afin de permettre le passage du flux d'air à déshuiler A à travers le pignon 20. Autrement dit, les ouvertures de guidage 24 permettent une communication fluidique entre la première face F1 et la deuxième face F2 afin d'alimenter le séparateur 10 selon une direction sensiblement parallèle à l'axe X. Ainsi, le flux d'air à déshuiler A peut alimenter le séparateur 10 en passant à travers les ouvertures de guidage 24 du pignon 20. Le flux d'air à déshuiler A n'est ainsi pas perturbé par le pignon 20 et sa proximité avec le séparateur 10. Le pignon 20 comprend une pluralité d'ouvertures de guidage 24 réparties radialement autour de l'axe X du pignon 20. Ceci permet le passage d'une quantité importante d'air à déshuiler A à travers le pignon 20.

Dans cet exemple, en référence à la figure 3, chaque ouverture de guidage 24 présente une forme polygonale définissant quatre surfaces opposées deux à deux, deux surfaces radiales et deux surfaces tangentielles 26. Les deux surfaces radiales sont désignées « surface de guidage 25 » et permettent de guider l'air traversant l'ouverture de guidage 24 lors de la rotation du pignon 20 à la manière d'un redresseur. Il va de soi que la forme polygonale de l'ouverture de guidage 24 pourrait comprendre un nombre différent de surfaces.

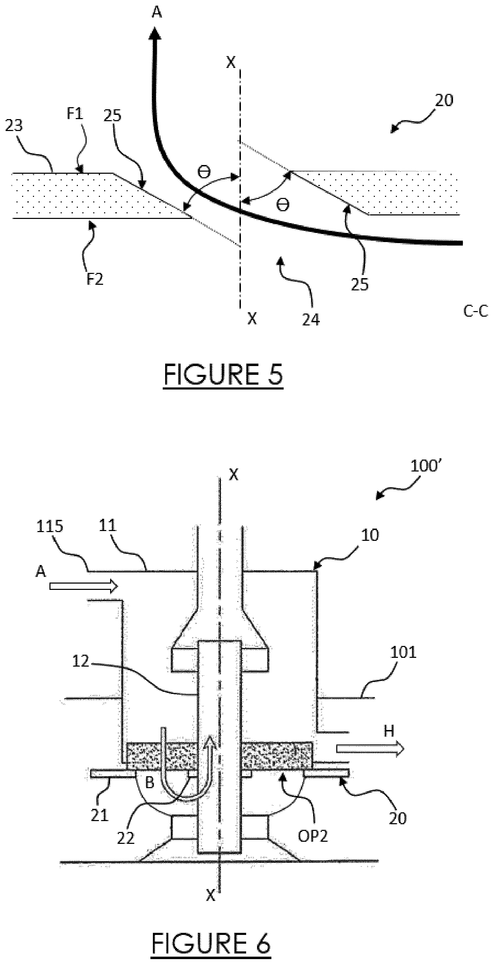

Comme illustré sur la figure 5 qui représente une vue partielle d'une ouverture de guidage 24 pignon 20 selon la coupe C-C, les surfaces de guidage 25 sont inclinées par rapport à l'axe X du pignon 20. Autrement dit, chaque surface de guidage 25 définit un angle θ avec l'axe X. De telles surfaces de guidage 25 inclinées permettent ainsi de redresser un flux d'air en entrée pour fournir un flux d'air en sortie ayant une incidence axiale dans l'ouverture de passage OP1. De manière préférée, l'angle θ est compris entre 5° et 75°, de préférence, entre 20° et 60°, de préférence encore, entre 30° et 50° afin de guider l'air de manière optimale. De préférence encore, les surfaces de guidage 25 sont planes de manière à permettre un redressement et une accélération. De préférence encore, les surfaces de guidage 25 possèdent des dimensions identiques.

Ainsi, grâce à l'invention, le séparateur air/huile 10 peut être alimenté de manière optimale par un flux d'air à déshuiler A et, ce, même si la compacité est importante dans le boitier d'accessoires 100 et que l'écartement entre le séparateur air/huile 10 et le pignon 20 est réduit. De plus, l'utilisation de surfaces de guidage 25 permet une circulation optimale dans le séparateur air/huile 10 et un débit important. A la manière d'un ventilateur, le pignon 20 permet d'aspirer et d'accélérer un flux d'air lors de sa rotation. De manière avantageuse, le pignon 20 remplit ainsi une première fonction d'entraînement du séparateur 10 et une deuxième fonction d'injection d'un flux d'air dans le séparateur 10.

Il a été présenté un pignon 20 situé à proximité de l'entrée du flux d'air à déshuiler A du séparateur air/huile 10 mais il va de soi que l'invention s'applique également pour un pignon 20 situé à proximité de la sortie d'air déshuilé B du séparateur air/huile 10

En référence à la figure 6, il est représenté un boîtier 100' dans lequel le séparateur air/huile 10 comporte une partie montée à l'extérieur du carter 101 du boîtier 100' et dont la sortie du flux d'air déshuilé B est située à proximité du pignon d'entrainement 20.

Dans cet exemple, le pignon 20 est monté sur le séparateur air/huile 10 au niveau de son extrémité proximale. Le séparateur 10 est alimenté par un flux d'air à déshuiler A par une conduite 115 placée à son extrémité distale, autrement dit à l'extérieur du carter 101 du boîtier 100'. Lorsque le séparateur 10 est entraîné en rotation, le flux d'air à déshuiler A entre dans le séparateur 10 par cette conduite 115, le flux d'huile H et le flux d'air déshuilé B sont séparés par effet centrifuge et le flux d'air déshuilé B sort de la cavité par une ouverture de passage OP2 au niveau de l'extrémité proximale, c'est-à-dire, en regard du pignon 20.

Le flux d'air déshuilé B est guidé hors de la cavité par les surfaces de guidage 25 du pignon 20. Autrement dit, dans cette forme de réalisation, les surface de guidage 25 du pignon 20, permettent, d'une part, de guider le flux d'air déshuilé B et, d'autre part, d'expulser cet air déshuilé B hors de la cavité du séparateur 10 par effet de succion.

L'arbre 12 comprend une ou plusieurs ouvertures (non représentée) permettant de mettre en communication la cavité intérieure de l'arbre 12 avec le volume dans lequel circule l'air à déshuiler A. Ainsi, le flux d'air déshuilé B peut circuler dans la cavité intérieure de l'arbre 12 via les ouvertures.

Le flux d'air déshuilé B est ensuite évacué du séparateur 10 par l'arbre creux 12 au niveau de l'extrémité distale du séparateur 10. Autrement dit, le flux d'air déshuilé B est évacué au niveau de la même extrémité du séparateur 10 depuis laquelle il est alimenté par un flux d'air à déshuiler A.

## Revendications

1. Pignon (20) d'entrainement pour un séparateur air/huile (10) d'un boîtier d'accessoires (100, 100') d'une turbomachine, le séparateur air/huile (10) étant configuré pour être alimenté en entrée par un flux d'air à déshuiler (A) et pour fournir en sortie, d'une part, un flux d'air déshuilé (B) et, d'autre part, un flux d'huile (H) par centrifugation, le pignon (20) étant configuré pour entraîner le séparateur (10) en rotation selon un axe de rotation (X), le pignon (20) étant adapté pour être monté en regard d'une ouverture de passage du séparateur (10) configurée pour permettre le passage d'un flux d'air à déshuiler (A) ou d'un flux d'air déshuilé (B), le pignon (20) comprenant un axe central (21) s'étendant selon l'axe de rotation (X), une partie périphérique (22) dentée et un voile (23) s'étendant entre l'axe central (21) et la partie périphérique (22), le pignon (20) comprenant au moins une ouverture de guidage (24) traversant le voile (23), le pignon étant **caractérisé en ce qu'** au moins une ouverture de guidage (24) définissant au moins deux surfaces de guidage (25) inclinées par rapport à l'axe de rotation (X) et opposées l'une à l'autre de manière à guider, parallèlement à l'axe de rotation (X), un flux d'air à déshuiler (A) dans le séparateur (10) ou un flux d'air déshuilé (B) hors du séparateur (10) via l'ouverture de guidage (24) du pignon (20).

2. Pignon (20) selon la revendication 1, dans lequel au moins une des au moins deux surfaces de guidage (25) est inclinée par rapport à l'axe de rotation (X) d'un angle (θ) compris entre 5° et 75°, de préférence, entre 20° et 60°, de préférence encore, entre 30° et 50°.

3. Pignon (20) selon l'une des revendications 1 et 2, dans lequel au moins une des au moins deux surfaces de guidage (25) s'étend radialement, selon sa longueur, à l'axe de rotation (X).

4. Pignon (20) selon l'une des revendications 1 à 3, dans lequel les au moins deux surfaces de guidage (25) s'étendent, selon leur longueur, radialement à l'axe de rotation (X).

5. Pignon (20) selon l'une des revendications 1 à 4, dans lequel les au moins deux surfaces de guidage (25) possèdent des dimensions identiques.

6. Pignon (20) selon l'une des revendications précédentes, comprenant une pluralité d'ouvertures (24) définissant chacune au moins une surface de guidage (25).

7. Pignon (20) selon la revendication précédente, dans lequel les ouvertures de guidage (24) sont réparties radialement autour de l'axe de rotation (X).

8. Boîtier d'accessoires (100, 100') pour turbomachine, ledit boîtier (100, 100') comprenant un séparateur air/huile (10), configuré pour être alimenté en entrée par un flux d'air à déshuiler (A) et pour fournir en sortie, d'une part, un flux d'air déshuilé (B) et, d'autre part, un flux d'huile (H) par centrifugation, et un pignon (20) selon l'une des revendications précédentes configuré pour entraîner le séparateur (10) en rotation selon l'axe de rotation (X), le pignon (20) étant monté en regard d'une ouverture de passage du séparateur (10) configurée pour permettre le passage d'un flux d'air à déshuiler (A) ou d'un flux d'air déshuilé (B).

9. Turbomachine, notamment pour aéronef, comprenant un boîtier d'accessoires (100, 100') selon la revendication précédente.

## Patentansprüche

1. Antriebsrad (20) für einen Luft-Öl-Abscheider (10) eines Anbaugerätegehäuses (100, 100') eines Turbotriebwerks, wobei der Luft-Öl-Abscheider (10) dazu ausgelegt ist, am Eingang von einem zu entölenden Luftstrom (A) versorgt zu werden und am Ausgang zum einen einen entölten Luftstrom (B) und zum anderen einen Ölstrom (H) durch Zentrifugieren bereitzustellen, wobei das Rad (20) dazu ausgelegt ist, den Abscheider (10) gemäß einer Rotationsachse (X) rotatorisch anzutreiben, wobei das Rad (20) geeignet ist, einer Durchgangsöffnung des Abscheiders (10) zugewandt angebracht zu sein, die dazu ausgelegt ist, den Durchgang eines zu entölenden Luftstroms (A) oder eines entölten Luftstroms (B) zu erlauben, wobei das Rad (20) eine zentrale Welle (21) umfasst, die sich gemäß der Rotationsachse (X) erstreckt, wobei sich ein gezahnter peripherer Teil (22) und ein Schirm (23) zwischen der zentralen Welle (21) und dem peripheren Teil (22) erstrecken, wobei das Rad (20) mindestens eine Führungsöffnung (24) umfasst, die den Schirm (23) durchquert, wobei das Rad **dadurch gekennzeichnet ist, dass** mindestens eine Führungsöffnung (24) mindestens zwei Führungsflächen (25) definiert, die im Verhältnis zur Rotationsachse (X) derart geneigt und einander gegenüberliegend sind, dass parallel zur Rotationsachse (X) ein zu entölender Luftstrom (A) in den Abscheider (10) oder ein entölter Luftstrom (B) aus dem Abscheider (10) über die Führungsöffnung (24) des Rades (20) geführt wird.

2. Rad (20) nach Anspruch 1, wobei mindestens eine der mindestens zwei Führungsflächen (25) im Verhältnis zur Rotationsachse (X) in einem Winkel (θ) geneigt ist, der zwischen 5° und 75°, vorzugsweise zwischen 20° und 60°, weiterhin vorzugsweise zwischen 30° und 50° liegt.

3. Rad (20) nach einem der Ansprüche 1 und 2, wobei sich mindestens eine der mindestens zwei Führungsflächen (25) gemäß ihrer Länge radial zur Rotationsachse (X) erstreckt.

4. Rad (20) nach einem der Ansprüche 1 bis 3, wobei sich die mindestens zwei Führungsflächen (25) gemäß ihrer Länge radial zur Rotationsachse (X) erstrecken.

5. Rad (20) nach einem der Ansprüche 1 bis 4, wobei die mindestens zwei Führungsflächen (25) identische Abmessungen besitzen.

6. Rad (20) nach einem der vorangehenden Ansprüche, umfassend eine Vielzahl von Öffnungen (24), von denen jede mindestens eine Führungsfläche (25) definiert.

7. Rad (20) nach vorangehendem Anspruch, wobei die Führungsöffnungen (24) radial um die Rotationsachse (X) verteilt sind.

8. Anbaugerätegehäuse (100, 100') für ein Turbotriebwerk, wobei das Gehäuse (100, 100') einen Luft-Öl-Abscheider (10) umfasst, der dazu ausgelegt ist, am Eingang mit einem zu entölenden Luftstrom (A) versorgt zu werden und am Ausgang zum einen einen entölten Luftstrom (B) und zum anderen einen Ölstrom (H) durch Zentrifugieren bereitzustellen, und ein Rad (20) nach einem der vorangehenden Ansprüche, das dazu ausgelegt ist, den Abscheider (10) gemäß der Rotationsachse (X) rotatorisch anzutreiben, wobei das Rad (20) einer Durchgangsöffnung des Abscheiders (10) zugewandt angebracht ist, die dazu ausgelegt ist, den Durchgang eines zu entölenden Luftstroms (A) oder eines entölten Luftstroms (B) zu erlauben.

9. Turbotriebwerk, insbesondere für ein Flugzeug, das ein Anbaugerätegehäuse (100, 100') nach vorangehendem Anspruch umfasst.

## Claims

1. Drive pinion (20) for an air/oil separator (10) of an accessory gearbox (100, 100') of a turbomachine, the air/oil separator (10) being configured to be supplied at the input by an air flow to de-oil (A) and to supply at the output, on the one hand, a de-oiled air flow (B) and, on the other hand, an oil flow (H) by centrifugation, the pinion (20) being configured to drive the separator (10) rotationally along an axis of rotation (X), the pinion (20) being suited to being mounted facing a passage opening of the separator (10) configured to enable the passage of an air flow to de-oil (A) or a de-oiled air flow (B), the pinion (20) comprising a central axis (21) extending along the axis of rotation (X), a toothed peripheral part (22) and a web plate (23) extending between the central axis (21) and the peripheral part (22), the pinion (20) comprising at least one guiding opening (24) traversing the web plate (23), the pinion being **characterised in that** at least one guiding opening (24) defining at least two guiding surfaces (25) inclined with respect to the axis of rotation (X) and opposite each other in such a way as to guide, parallel to the axis of rotation (X), an air flow to de-oil (A) into the separator (10) or a de-oiled air flow (B) out of the separator (10) via the guiding opening (24) of the pinion (20).

2. Pinion (20) according to claim 1, wherein at least one of at least two guiding surfaces (25) is inclined with respect to the axis of rotation (X) by an angle (θ) comprised between 5° and 75°, preferably, between 20° and 60°, further preferably, between 30° and 50°.

3. Pinion (20) according to one of claims 1 and 2, wherein at least one of the at least two guiding surfaces (25) extends radially to the axis of rotation (X), according to its length.

4. Pinion (20) according to one of claims 1 to 3, wherein the at least two guiding surfaces (25) extend radially to the axis of rotation (X), according to their length .

5. Pinion (20) according to one of claims 1 to 4, wherein the at least two guiding surfaces (25) have identical dimensions.

6. Pinion (20) according to one of the preceding claims, comprising a plurality of openings (24) each defining at least one guiding surface (25).

7. Pinion (20) according to the preceding claim, wherein the guiding openings (24) are distributed radially around the axis of rotation (X).

8. Accessory gearbox (100, 100') for turbomachine, said gearbox (100, 100') comprising an air/oil separator (10), configured to be supplied at the input by an air flow to de-oil (A) and to supply at the output, on the one hand, a de-oiled air flow (B) and, on the other hand, an oil flow (H) by centrifugation, and a pinion (20) according to one of the preceding claims configured to drive the separator (10) rotationally along the axis of rotation (X), the pinion (20) being mounted facing a passage opening of the separator (10) configured to enable the passage of an air flow to de-oil (A) or a de-oiled air flow (B).

9. Turbomachine, notably for aircraft, comprising an accessory gearbox (100, 100') according to the preceding claim.
